# EUROPEAN PATENT APPLICATION

(11) **EP 3 416 058 A1**
(43) Date of publication of application: **19.12.2018**
(21) Application number: 18177418.3
(22) Date of filing: 12.06.2018
(51) Int. Cl.: G06F 9/50, H04L 12/773

(54) **ROUTERS AND HYBRID PACKET PROCESSING METHODS THEREOF**

(30) Priority: 16.06.2017 CN 201710455871
(71) Applicant: Synology Incorporated, Taipei 103 (TW)
(72) Inventor: Li, Kuang-Ming, 103 Taipei (TW)
(74) Representative: Michalski Hüttermann & Partner Patentanwälte mbB

(57) **Abstract**

A router including a communication device, a first controller, and a second controller is provided. The communication device receives a plurality of first packets and a plurality of second packets subsequent to the first packets. The second controller processes the first packets to determine at least one of a current connection count, an application type, and a traffic parameter, and determines whether to enable the first controller to process the second packets according to at least one of the current connection count, the application type, and the traffic parameter.

## Description

### CROSS REFERENCE TO RELATED APPLICATIONS

This Application claims priority of China Application No. 201710455871.6, filed on June 16, 2017, the entirety of which is incorporated by reference herein.

### BACKGROUND OF THE APPLICATION

### Field of the Application

The application relates generally to packet processing techniques for routers, and more particularly, to a router with dual controllers and a hybrid packet processing method thereof, in which different controllers are enabled to handle the task of packet processing according to different parameters, so as to maintain a balance between system resource utilization and system performance of the router.

### Description of the Related Art

In typical network planning, networks are divided into Local Area Networks (LANs) and Wide Area Networks (WANs) for optimization of network efficiency. Routers are commonly used as bridges to connect LANs and WANs. The packet processing within a router can be categorized into two parts, wherein the first part may refer to control-plane processing, including connection setup and data delivery, and the second part may refer to data-plane processing, including packet forwarding, such as IPv4 forwarding and Network Access Translation (NAT), between different components in the router. Most (e.g., 90%) of the time required for complete packet processing is spent on the data-plane processing. Due to this, many solutions for improving router performance aim to accelerate the data-plane processing.

A conventional design of such solutions proposes to pack the most-used functions concerning data-plane processing into a software module for accelerating the computing and processing functions of the Central Processing Unit (CPU). Alternatively, another conventional design of such solutions proposes to integrate the most-used functions concerning data-plane processing with the physical layer of a communication protocol, and implement them in a hardware component (e.g., a chip). However, relatively speaking, the first conventional design causes high CPU utilization which further leads to performance drop in the router, while the second conventional design causes high memory utilization which further leads to a drop in the concurrent connection limit of the router.

Therefore, it is desirable to have a more robust method of packet processing, which may efficiently improve both the performance and the concurrent connection limit of a router.

### BRIEF SUMMARY OF THE APPLICATION

In order to solve the aforementioned problem, the present application proposes a router with dual controllers and a hybrid packet processing method thereof, in which different controllers are enabled to handle the task of packet processing according to different parameters, thereby improving both the performance and the concurrent connection limit of the router.

In one aspect of the application, a router comprising a communication device, a first controller, and a second controller is provided. The communication device is configured to receive a plurality of first packets and a plurality of second packets subsequent to the first packets. The second controller is configured to process the first packets to determine at least one of a current connection count, an application type, and a traffic parameter, and determine whether to enable the first controller to process the second packets according to at least one of the current connection count, the application type, and the traffic parameter.

In another aspect of the application, a hybrid packet processing method for a router comprising a first controller and a second controller is provided. The hybrid packet processing method comprises the following steps: receiving a plurality of first packets and a plurality of second packets subsequent to the first packets; processing, by the second controller, the first packets to determine at least one of a current connection count, an application type, and a traffic parameter; and determining, by the second controller, whether to enable the first controller to process the second packets according to at least one of the current connection count, the application type, and the traffic parameter.

Other aspects and features of the application will become apparent to those with ordinary skill in the art upon review of the following descriptions of specific embodiments of the routers and hybrid packet processing methods.

### BRIEF DESCRIPTION OF THE DRAWINGS

The application can be more fully understood by reading the subsequent detailed description and examples with references made to the accompanying drawings, wherein:
Fig. 1 is a schematic diagram illustrating a network environment according to an embodiment of the application;
Fig. 2 is a block diagram illustrating the hardware architecture of the router 10 according to an embodiment of the application;
Fig. 3 is a schematic diagram illustrating the OSI model for network communications;
Fig. 4 is a schematic diagram illustrating packet analyses in the 7 layers of the OSI model during packet delivery;
Fig. 5 is a flow chart illustrating the hybrid packet processing method according to an embodiment of the application;
Fig. 6 is a flow chart illustrating the hybrid packet processing method according to another embodiment of the application; and
Fig. 7 is a flow chart illustrating the hybrid packet processing method according to another embodiment of the application.

### DETAILED DESCRIPTION OF THE APPLICATION

The following description is made for the purpose of illustrating the general principles of the application and should not be taken in a limiting sense. It should be understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

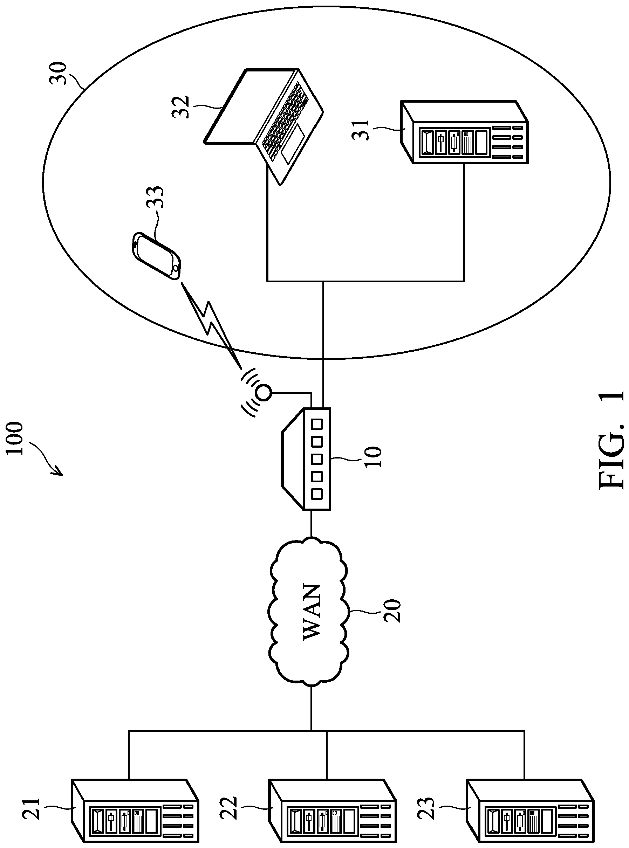

Fig. 1 is a schematic diagram illustrating a network environment according to an embodiment of the application. The network environment 100 includes a router 10, a WAN 20, and a LAN 30, wherein the LAN 30 is connected to the WAN 20 through the router 10.

The WAN 20 may also be called an external network or a public network, which may include telecommunication network(s), optical network(s), and/or Asymmetric Digital Subscriber Line (ADSL) network(s). The WAN 20 generally spans a wild range from tens of kilometers to thousands of kilometers. For example, the WAN 20 may cover areas, cities, and/or countries which may be connected via the Internet.

There are three network communication devices 21 to 23 disposed on the WAN 20, wherein each of the network communication devices 21 to 23 may be a notebook PC, a desktop computer, a workstation, a server, a smartphone, or panel PC, etc. For example, any one of the network communication devices 21 to 23 may be a server configured to provide services or applications, such as E-mail service, mobile push service, website service, or short message service, etc.

The LAN 30 may also be called an internal network or a private network, which may include Ethernet(s), twisted-pair cable network(s), and/or coaxial cable networks. The LAN 30 generally covers a small area, such as an office or a floor of a building.

There are three user devices 31 to 33 disposed on the LAN 30, wherein each of the user devices 31 to 33 may be a notebook PC, a desktop computer, a smartphone, a panel PC, a workstation, a server, or any consumer electronic device with a wired/wireless communication function.

The router 10 is responsible for connecting the WAN 20 and the LAN 30. Specifically, the router 10 provides the functions of packet processing, including packet routing, packet forwarding, and/or traffic monitoring, to facilitate the communications between the network communication devices 21 to 23 and the user devices 31 to 33.

In one embodiment, traffic monitoring may be applied to collect traffic information of certain applications. For example, the traffic information may include the total packet counts, the number of large packets (i.e., packets with sizes greater than a predetermined bytes), the throughput, the Media Access Control (MAC) address (e.g., the source/destination MAC address), and/or the timestamp, wherein the throughput refers to the traffic volume within a period of time. If a connection continuously requests for packet delivery, the average packet size and throughput of the connection will be relatively greater than the average packet size and throughput of a connection which only sometimes requests for packet delivery. For example, the average packet size and throughput of a connection related to video streaming or file transfer are more likely to be greater than the average packet size and throughput of a pooling connection, and the packets of the connection related to video streaming or file transfer have a greater chance to be classified as large packets.

According to some statistics research (e.g., "Analysis and Prediction of Real Network Traffic", Mohamed Faten Zhani and Halima Elbiaze, 2009), it may be found, in the traffic information collected in a period of time, that the packet size has a tri-modal distribution in which the three peaks are 40 bytes, 576 bytes, and 1500 bytes in sequence. Therefore, the large packets herein may refer to packets with sizes greater than 576 bytes. It should be understood that the packet size described in the application is for illustrative purposes only and is not intended to limit the scope of the application. In some embodiments, the size for defining a large packet may vary according to different practice requirements.

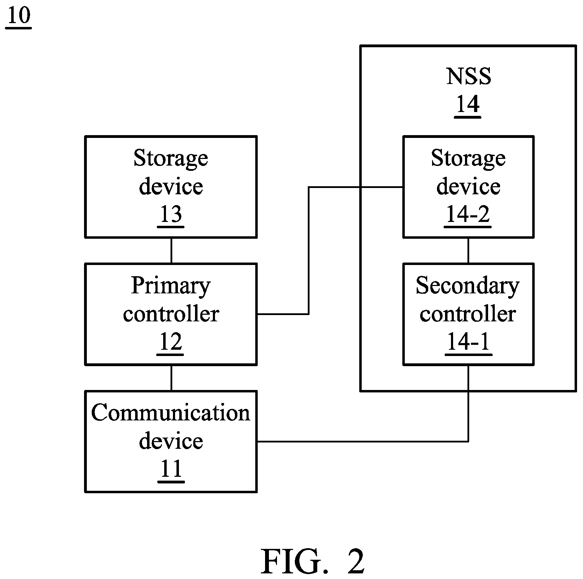

Fig. 2 is a block diagram illustrating the hardware architecture of the router 10 according to an embodiment of the application. The router 10 includes a communication interface 11, a primary controller 12, a storage device 13, and a Network Subsystem (NSS) 14.

The communication interface 11 is responsible for providing network connections to the WAN 20 (including the network communication devices 21 to 23 disposed on the WAN 20) and the LAN 30 (including the user device 31 to 33 disposed on the LAN 30). The communication interface 11 may provide the network connections using a wired/wireless communication technology, such as the Ethernet technology, Wireless Fidelity (Wi-Fi) technology, Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, or Time- Division LTE (TD-LTE) technology.

In one embodiment, the communication interface 11 may include an Ethernet card for providing the function of wired communications. In another embodiment, the communication interface 11 may include a wireless transceiver for providing the function of wireless communications, wherein the wireless transceiver may include a baseband device, a Radio Frequency (RF) device, and an antenna. The baseband processing device may contain multiple hardware components to perform baseband signal processing, including Analog-to-Digital Conversion (ADC)/Digital-to-Analog Conversion (DAC), gain adjusting, modulation/demodulation, encoding/decoding, and so on. The RF device may receive RF wireless signals via the antenna, convert the received RF wireless signals into baseband signals, which are processed by the baseband processing device, or receive baseband signals from the baseband processing device and convert the received baseband signals into RF wireless signals, which are later transmitted via the antenna.

The primary controller 12 may be a general-purpose processor, a CPU, a Micro Control Unit (MCU), an Application Processor (AP), or a Digital Signal Processor (DSP), which includes various circuits for performing the functions of data processing and computing, controlling the communication interface 11 to provide network connections, and reading or writing data and/or program code from or to the storage device 13, and performing the functions of packet routing, packet forwarding, and/or traffic monitoring. In addition, the primary controller 12 includes other circuits for controlling the NSS 14 to accelerate packet processing (i.e., offloading the task of packet processing to the NSS 14).

In particular, the primary controller 12 coordinates the operations of the communication interface 11, the storage device 13, and the NSS 14 for performing the hybrid packet processing method of the present application. In one embodiment, the primary controller 12 may read and execute program code of an Operating System (OS) and application(s) from the storage device 13.

The storage device 13 is a non-transitory machine-readable storage medium for storing transport-layer parameters and application-layer parameters which are obtained from packet analysis, and storing computer-executable instructions or program code, including program code of an OS, application(s), and/or communication protocols (e.g., various protocols involved in the 7 layers of the Open System Interconnection (OSI) reference model).

In an embodiment, the storage device 13 may be a Double Data Rate Synchronous Dynamic Random Access Memory (DDR SDRAM), wherein the term "double data rate" refers to the fact that the DDR SDRAM with a certain clock frequency achieves nearly twice the bandwidth of a Single Data Rate (SDR) SDRAM running at the same clock frequency, and thus, the DDR SDRAM has better performance than the conventional RAM. In another embodiment, the storage device 13 may be a FLASH memory, a cache memory, another type of memory, or another type of storage medium (e.g., a hard drive, an optical disc).

The NSS 14 may also be called a hardware acceleration engine, which is responsible for receiving instruction(s) from the primary controller 12 to replace the primary controller 12 for providing the function(s) of packet routing, packet forwarding, and/or traffic monitoring. Specifically, the NSS 14 includes a secondary controller 14-1 and a storage device 14-2. The secondary controller 14-1 may be an MCU, an AP, or a DSP, which includes various circuits for performing the functions of data processing and computing, controlling the communication interface 11 to provide network connections, and reading or writing data and/or program code from or to the storage device 14-2, and handling the task of packet processing (including packet routing, packet forwarding, and/or traffic monitoring), which is offloaded from the primary controller 12. In one embodiment, the secondary controller 14-1 uses less power and has worse computing performance than the primary controller 12.

As will be appreciated by persons skilled in the art, the circuits in the primary controller 12 and the secondary controller 14-1 will typically include transistors that are configured in such a way as to control the operation of the circuitry in accordance with the functions and operations described herein. As will be further appreciated, the specific structure or interconnections of the transistors will typically be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in design of electronic and digital systems.

The storage device 14-2 is a non-transitory machine-readable storage medium for storing information concerning packet routing, packet forwarding, and/or traffic monitoring, and storing computer-executable instructions or program code, including program code of communication protocols (e.g., various protocols involved in the 7 layers of the OSI reference model).

In an embodiment, storage device 14-2 may be a Tightly-Coupled Memory (TCM) which has a higher access rate and lower power consumption than the conventional memory. The storage device 14-2 is generally coupled to the cores of the secondary controller 14-1, and serves as a cache for the secondary controller 14-1. In another embodiment, the storage device 14-2 may be a FLASH memory, a cache memory, another type of memory, or another type of storage medium.

It should be understood that the components described in the embodiment of Fig. 2 are for illustrative purposes only and are not intended to limit the scope of the application. For example, the router 10 may further include a display device (e.g., a Liquid-Crystal Display (LCD), Light-Emitting Diode (LED) display, or Electronic Paper Display (EPD), etc.), and/or an Input/Output (I/O) device (e.g., one or more buttons, a keyboard, a mouse, a touch pad, a video camera, a microphone, or a speaker, etc.).

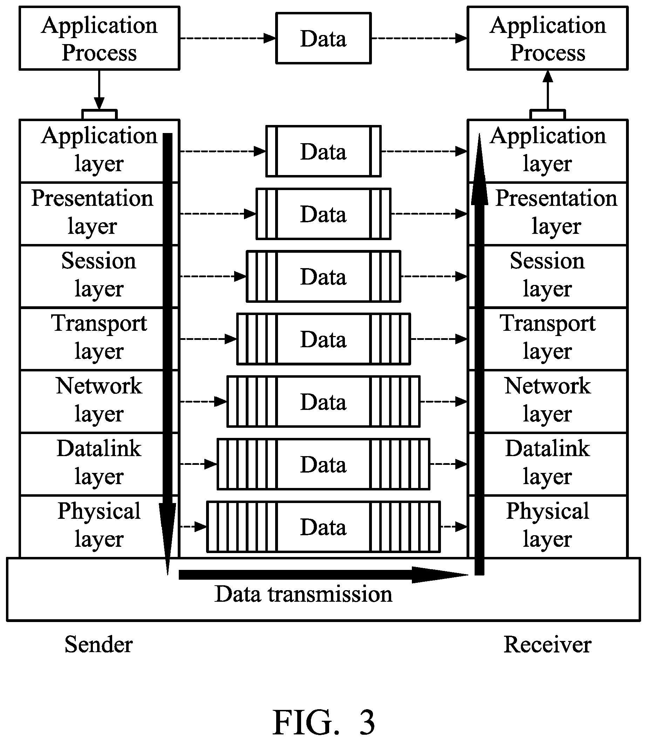

Fig. 3 is a schematic diagram illustrating the OSI model for network communications. As shown in Fig. 3, the OSI model partitions a communication system into 7 abstraction layers, wherein each layer provides a respective packet processing function to meet a certain requirement. During the process of packet delivery, each packet is encapsulated in each layer at the sender so that the packet can be delivered to the correct receiver. Assuming that an application requests to send data, the Transport layer at the sender includes protocol (e.g., Transmission Control Protocol (TCP), User Datagram Protocol (UDP), or Internet Control Message Protocol (ICMP)) information in the header of each packet to be transmitted, so that packets may be delivered to the proper application at the receiver. Subsequently, the Network layer at the sender includes information of the source Internet Protocol (IP) address and the destination IP address in the header of each packet, so that packets may be delivered to the correct receiver. Lastly, the Physical layer at the sender converts each packet into the transmission format of the physical networks (e.g., Ethernet), so that packets may be carried in various physical media.

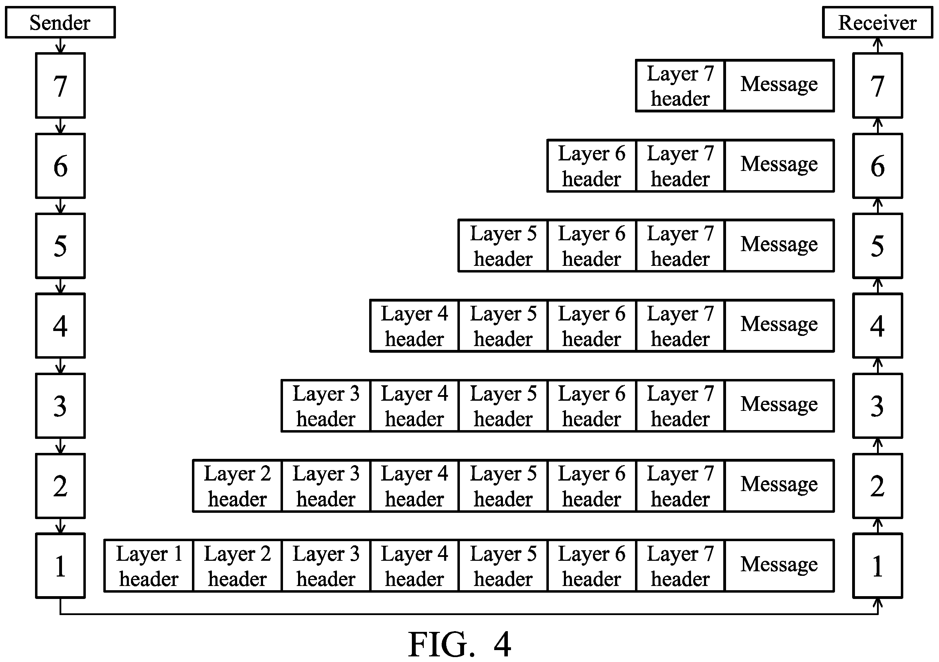

Fig. 4 is a schematic diagram illustrating packet analyses in the 7 layers of the OSI model during packet delivery. As shown in Fig. 4, a route needs to analyze each incoming packet one layer at a time to know the detailed packet information. For the purpose of traffic monitoring, the header of each packet needs to be analyzed to obtain the source IP address with which the router may identify exactly where the packet comes from. Also, during the packet processing in the Application layer, each packet is analyzed to identify which protocol is used for the Application layer. For example, the protocol used for the Application layer may be Telnet, and the analyzed packet may be determined to be related to application data, such as Bulletin Board System (BBS) data, which is in compliance with the Telnet protocol.

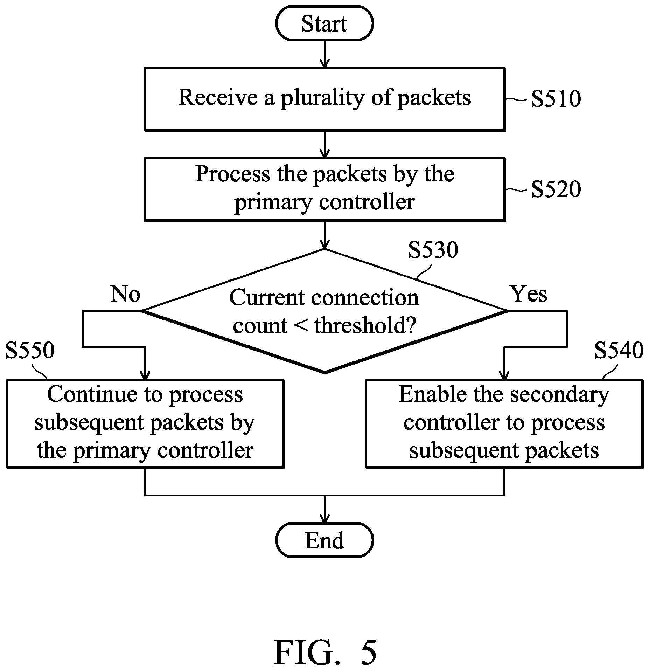

Fig. 5 is a flow chart illustrating the hybrid packet processing method according to an embodiment of the application. In this embodiment, the hybrid packet processing method is applied to a router with dual controllers, e.g., the router 10, and allows the router to selectively enable the primary controller or the secondary controller to handle the task of packet processing.

To begin, the router receives a plurality of packets (step S510). Next, the primary controller processes the packets, wherein the packet processing includes analyzing the packets to determine the transport-layer parameters, performing traffic monitoring on the packets to determine the current connection count, and routing and forwarding the packets (step S520).

Specifically, the transport-layer parameters may be determined by performing the OSI layer-4 packet analysis. That is, the transport-layer parameters may include parameters associated with layers 1 to 4 of the OSI reference model. For example, the transport-layer parameters may include at least one of: source and destination IP addresses, source and destination port number, source and destination protocols, source and destination MAC addresses, total packet count, and total packet size.

Subsequently, the primary controller determines whether the current connection count is less than a threshold (step S530), and if so, sends the transport-layer parameters to the secondary controller and enables the secondary controller to process subsequent packets, i.e., offloads the task of packet processing to the secondary controller (step S540). Otherwise, if the current connection count is greater than or equal to the threshold, the primary controller continues to process subsequent packets (step S550), and the hybrid packet processing method ends.

The threshold may be configured to be 200000 in an embodiment, and 1800000 in another embodiment, depending on the size of the hardware resources (e.g., the memory space) of the router.

It should be understood that the performance of the router may be improved and the CPU utilization of the primary controller may be reduced by offloading the task of packet processing from the primary controller to the secondary controller. However, by doing so, the memory (e.g., the storage device 13) utilization may increase due to the parameters required for packet processing (the parameters are basically recorded per connection) being duplicated to be used by the secondary controller, and the stability of the router may be sacrificed when the memory utilization is too high. In view of the forgoing embodiment of Fig. 5, it will be appreciated that the present application may improve the performance of the router, while reducing the memory utilization to raise the concurrent connection limit, thereby improving the stability of the router.

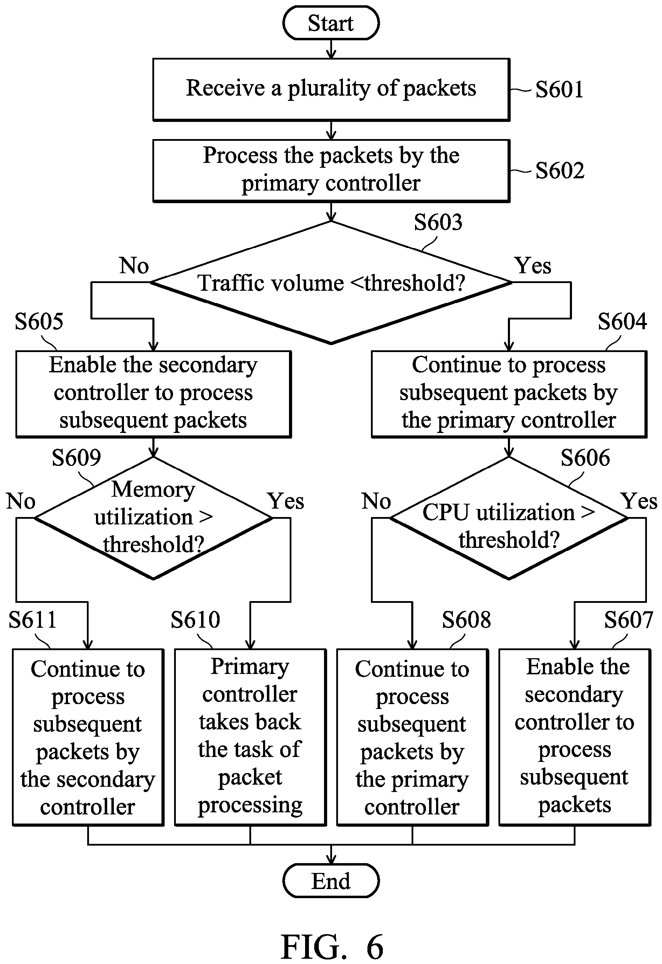

Fig. 6 is a flow chart illustrating the hybrid packet processing method according to another embodiment of the application. In this embodiment, the hybrid packet processing method is applied to a router with dual controllers, e.g., the router 10, and allows the router to selectively enable the primary controller or the secondary controller to handle the task of packet processing.

To begin, the router receives a plurality of packets (step S601). Next, the primary controller processes the packets, wherein the packet processing includes analyzing the packets to determine the transport-layer parameters, the application type, and traffic parameters, and routing and forwarding the packets (step S602).

Specifically, the primary controller may perform OSI layer-7 packet analysis to obtain the Application (APP) Identification (ID) and the protocol used in layer 7, and the application type may be determined according to the APP ID and the protocol used in layer 7. The traffic parameters may be determined from the packet analyses at layers 1 to 6, and may include the throughput, total packet count, the number of large packets, source and destination MAC addresses, and timestamps, etc.

Subsequently, the primary controller determines whether the traffic volume associated with the packets is less than a threshold according to at least one of the application type and the traffic parameters (step S603), and if so, the primary controller continues to process subsequent packets (step S604). Otherwise, if the traffic volume associated with the packets is greater than or equal to the threshold, the primary controller sends the transport-layer parameters to the secondary controller and enables the secondary controller to process subsequent packets, i.e., offloads the task of packet processing to the secondary controller (step S605).

Specifically, the traffic volume associated with the packets may be determined based on the average data rate of the packets. For example, if the average data rage of the packets is 17 Kbyte/s, then the traffic volume in a second may be determined to be 17 Kbytes.

In an embodiment, if the APP ID indicates the application being related to YouTube or File Transfer Protocol (FTP), then the traffic volume associated with the packets may be greater than or equal to the threshold (depending on the configured value of the threshold). Otherwise, if the APP ID indicates that the protocol used in layer 7 is the Simple Network Management Protocol (SNMP), the HTTP_PROXY protocol, the Domain Name System (DNS) protocol, the Network Time Protocol (NTP), or the Internet Group Management Protocol (IGMP), then the traffic volume associated with the packets may be less than the threshold (depending on the configured value of the threshold).

In another embodiment, the average data rate of an application may be determined based on history monitoring statistics, such as the APP ID, the MAC address(es) (e.g., source MAC address and/or destination MAC address), and timestamps, and then the traffic volume of the application may be determined based on the average data rate. Alternatively, the ratio of large packets to total packet count may be determined based on history monitoring statistics, such as the total packet count and the number of large packets. If an application has a history of sending many large packets, then it may be inferred that the upcoming packets of the application will very likely be large packets. Alternatively, the history monitoring statistics, such as the throughput of an application, may be used to determine the average data rate of the application, and then it may be inferred whether the future average data rate of the application will be greater or less than the threshold. For example, the throughput of a connection in the last 3 seconds may be used to infer the traffic volume or average data rate of the connection in the future. Table 1 presented below provides statistics of connections which tend to generate large packets. Table 2 presented below provides statistics of connections which do not tend to generate large packets.

**Table 1.**

| | Total traffic volume | | | | Traffic volume in the last 3 seconds | | | | Combined traffic volume | |
|---|---|---|---|---|---|---|---|---|---|---|
| Conn. No. | Transmitted | | Received | | Transmitted | | Received | | Packet count | Byte |
| | Packet count | Byte | Packet count | Byte | Packet count | Byte | Packet count | Byte | | |
| 1 | 87 | 6012 | 185 | 256657 | 16 | 3172 | 16 | 6659 | 272 | 262669 |
| 2 | 267 | 40280 | 415 | 516061 | 169 | 13881 | 262 | 360927 | 682 | 556341 |
| 3 | 140 | 14543 | 291 | 303318 | 13 | 3735 | 10 | 1119 | 431 | 317861 |
| 4 | 65 | 10211 | 117 | 143456 | 34 | 7854 | 60 | 73904 | 182 | 153667 |
| 5 | 118 | 23431 | 156 | 68718 | 46 | 8023 | 63 | 25219 | 274 | 92149 |
| 6 | 256 | 34603 | 354 | 168601 | 44 | 8192 | 50 | 18912 | 619 | 203204 |
| 7 | 94 | 33255 | 124 | 108300 | 43 | 11527 | 65 | 65597 | 218 | 141555 |
| 8 | 344 | 25659 | 675 | 897572 | 18 | 2024 | 13 | 5864 | 1019 | 923231 |

**Table 2.**

| | Total traffic volume | | | | Traffic volume in the last 3 seconds | | | | Combined traffic volume | |
|---|---|---|---|---|---|---|---|---|---|---|
| Conn. No. | Transmitted | | Received | | Transmitted | | Received | | Packet count | Byte |
| | Packet count | Byte | Packet count | Byte | Packet count | Byte | Packet count | Byte | | |
| 1 | 1 | 60 | 1 | 135 | 1 | 60 | 1 | 135 | 2 | 195 |
| 2 | 6 | 1105 | 6 | 523 | 4 | 985 | 4 | 403 | 12 | 1628 |
| 3 | 3 | 216 | 3 | 679 | 1 | 72 | 1 | 243 | 6 | 895 |
| 4 | 31 | 12429 | 17 | 3602 | 3 | 2537 | 3 | 1782 | 48 | 16031 |
| 5 | 17 | 1454 | 16 | 1067 | 10 | 1169 | 8 | 624 | 41 | 2521 |
| 6 | 3 | 204 | 3 | 282 | 1 | 68 | 1 | 84 | 6 | 486 |
| 7 | 3 | 198 | 3 | 573 | 1 | 66 | 1 | 187 | 6 | 771 |
| 8 | 16 | 1531 | 16 | 1031 | 9 | 1246 | 8 | 596 | 32 | 2562 |

According to Tables 1 and 2, if the transmitted or received traffic volume of a connection in the last 3 seconds is greater than 3000 Kbytes, then there's a big chance that the connection will generate a large amount of traffic (i.e., the traffic volume will be greater than the threshold) in the future, and it is preferred to offload the task of processing packets of this connection from the primary controller to the secondary controller. Based on the connection features revealed in Table 1, it may be determined that the performance of the primary controller may be improved and the memory utilization may be reduced by configuring the threshold for traffic volume (i.e., the threshold in step S603) to be 3000 Kbytes.

To clarify further, the determination of whether to offload the task of processing subsequent packets of a connection to the secondary controller may be performed based on the traffic statistics in the last N seconds. For example, in the scenarios shown in Tables 1 and 2, N is configured to be 3 and the threshold for the traffic volume is configured to be 3000 Kbytes. That is, if the transmitted or received traffic volume of a connection in 3 seconds is greater than 3000 Kbytes, the task of processing subsequent packets of the connection may be offloaded to the secondary controller.

It should be understood that the configuration of the threshold for traffic volume is for illustrative purposes only and is not intended to limit the scope of the application. In an embodiment, the threshold for traffic volume may be configured to be 100 Kbytes. That is, if the transmitted or received traffic volume of a connection is less than 100 Kbytes, the primary controller is enabled to handle the task of processing subsequent packets of the connection. Otherwise, if the transmitted or received traffic volume of a connection is greater than or equal to 100 Kbytes, the secondary controller is enabled to handle the task of processing subsequent packets of the connection. In other embodiments, N may be configured to be less or greater than 3 seconds, and the traffic volume used in step S603 may refer to the combined traffic volume of the connection.

Subsequent to step S604, the primary controller determines whether its CPU utilization is greater than a threshold (step S606), and if so, sends the transport-layer parameters to the secondary controller and enables the secondary controller to process subsequent packets, i.e., offloads the task of packet processing to the secondary controller (step S607), and the hybrid packet processing method ends. Otherwise, if the CPU utilization of the primary controller is less than or equal to the threshold, then the primary controller continues to process subsequent packets (step S608), and the hybrid packet processing method ends.

Subsequent to step S605, the primary controller determines whether the memory (e.g., the storage device 13) utilization is greater than a threshold (step S609), and if so, takes back the task of packet processing from the secondary controller (step S610), and the hybrid packet processing method ends. Otherwise, if the memory utilization is less than or equal to the threshold, the secondary controller continues to process subsequent packets (step S611), and the hybrid packet processing method ends.

In one embodiment, steps S606 and S609 may be configured to repeat periodically to realize dynamic coordination between the primary controller and the secondary controller.

It should be understood that when the packets are associated with small data transmission (e.g., the traffic volume in a period of time is less than a threshold), offloading the task of packet processing to the secondary controller may reduce the CPU utilization of the primary controller, but keeping the task of packet processing to be handled by the primary controller may achieve better performance and memory utilization of the router. In view of the forgoing embodiment of Fig. 6, it will be appreciated that the present application realizes robust coordination between the dual controllers in a router, by enabling the primary controller to process the packets associated with small data transmission and enabling the secondary controller to process the packets associated with large data transmission (e.g., the traffic volume in a period of time is greater than or equal to a threshold). Moreover, the coordination between the dual controllers may be further adjusted dynamically according to system resource utilizations (e.g., CUP utilization of the primary controller, or memory utilization), thereby improving the performance and stability of the router.

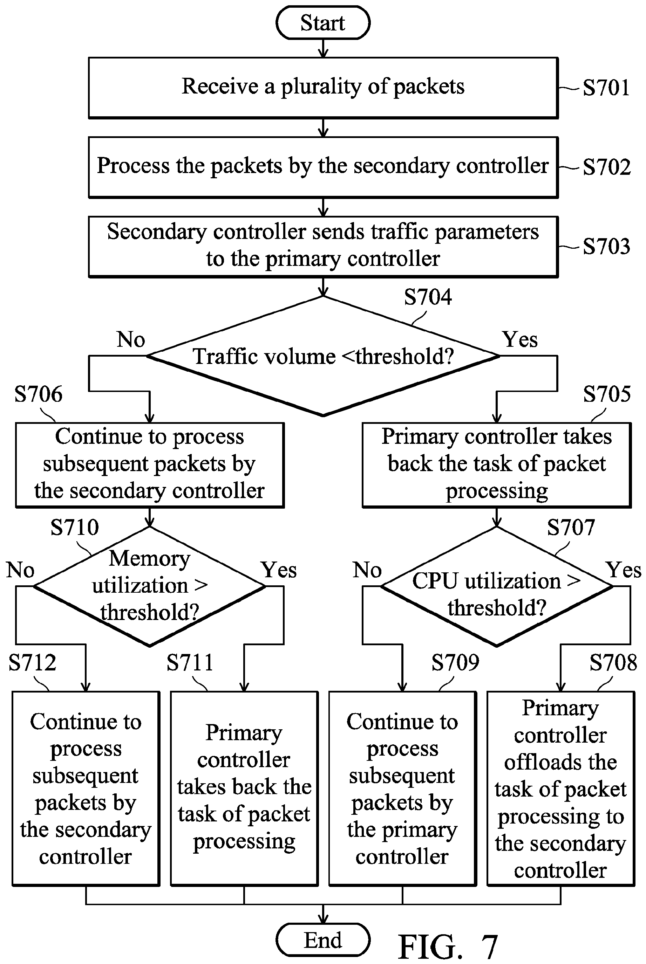

Fig. 7 is a flow chart illustrating the hybrid packet processing method according to another embodiment of the application. In this embodiment, the hybrid packet processing method is applied to a router with dual controllers, e.g., the router 10, and allows the router to selectively enable the primary controller or the secondary controller to handle the task of packet processing.

To begin, the router receives a plurality of packets (step S701). Next, the secondary controller is enabled to process the packets, wherein the packet processing includes analyzing the packets to determine the traffic parameters, and routing and forwarding the packets (step S702). Specifically, the traffic parameters may include throughput, total packet count, and the number of large packets.

Subsequently, the secondary controller sends the traffic parameters to the primary controller (step S703). The primary controller determines whether the traffic volume associated with the packets is less than a threshold according to the traffic parameters (step S704), and if so, takes back the task of processing subsequent packets from the secondary controller (step S705). Otherwise, if the traffic volume is greater than or equal to the threshold, the secondary controller continues to process subsequent packets (step S706).

Subsequent to step S705, the primary controller determines whether its CPU utilization is greater than a threshold (step S707), and if so, offloads the task of packet processing to the secondary controller (step S708), and the hybrid packet processing method ends. Otherwise, if the CPU utilization is less than or equal to the threshold, the primary controller continues to process subsequent packets (step S709), and the hybrid packet processing method ends.

Subsequent to step S706, the primary controller determines whether the memory (e.g., the storage device 13) utilization is greater than a threshold (step S710), and if so, takes back the task of packet processing from the secondary controller (step S711), and the hybrid packet processing method ends. Otherwise, if the memory utilization is less than or equal to the threshold, the secondary controller continues to process subsequent packets (step S712), and the hybrid packet processing method ends.

In one embodiment, steps S707 and S710 may be configured to repeat periodically to realize dynamic coordination between the primary controller and the secondary controller.

In view of the forgoing embodiment of Fig. 7, it will be appreciated that the present application may improve the performance and reduce the memory utilization of the router, by initially enabling the secondary controller to handle the task of packet processing and then dynamically configuring the primary controller to take over the task of packet processing when determining that the packets are associated with small data transmission (e.g., the traffic volume in a period of time is less than a threshold) according to the traffic parameters obtained from the packets. In addition, the present application may improve the performance of the router and reduce the CPU utilization of the primary controller, by enabling the secondary controller to handle the task of packet processing when determining that the packets are associated with large data transmission (e.g., the traffic volume in a period of time is greater than or equal to a threshold). Therefore, the present application realizes robust coordination between the dual controllers to improve the performance and stability of the router.

While the application has been described by way of example and in terms of preferred embodiment, it should be understood that the application cannot be limited thereto. Those who are skilled in this technology can still make various alterations and modifications without departing from the scope and spirit of this application. Therefore, the scope of the present application shall be defined and protected by the following claims and their equivalents.

Note that use of ordinal terms such as "first", "second", "third", "fourth", etc., in the claims to modify a claim element does not by itself connote any priority, precedence, or order of one claim element over another or the temporal order in which acts of the method are performed, but are used merely as labels to distinguish one claim element having a certain name from another element having the same name (except for use of ordinal terms), to distinguish the claim elements.

## Claims

1. A router, comprising:
a communication interface, configured to receive a plurality of first packets and a plurality of second packets subsequent to the first packets;
a first controller; and
a second controller, configured to process the first packets to determine at least one of a current connection count, an application type, and a traffic parameter, and determine whether to enable the first controller to process the second packets according to at least one of the current connection count, the application type, and the traffic parameter.

2. The router as claimed in claim 1, wherein the second controller is further configured to determine whether the current connection count is less than a first threshold, enable the first controller to process the second packets in response to the current connection count being less than the first threshold, and process the second packets in response to the current connection count being greater than or equal to the first threshold.

3. The router as claimed in claim 1 or 2, wherein the traffic parameter comprises at least one of the following:
a throughput of the router;
a total packet count;
a number of packets with sizes greater than a predetermined threshold;
a Media Access Control (MAC) address; and
information concerning a period of time.

4. The router as claimed in any of claims 1 to 3, wherein the second controller is further configured to determine traffic volume of the router according to at least one of the application type and the traffic parameter, determine whether the traffic volume is less than a second threshold, process the second packets in response to the traffic volume being less than the second threshold, and enable the first controller to process the second packets in response to the traffic volume being greater than or equal to the second threshold.

5. The router as claimed in claim 4, wherein the second controller, after processing the second packets, is further configured to determine whether a utilization level of the second controller is greater than a third threshold, and enable the first controller to process a plurality of third packets subsequent to the second packets in response to the utilization level being greater than the third threshold.

6. The router as claimed in claim 4 or 5, wherein, after enabling the first controller to process the second packets, the second controller is further configured to determine whether a memory utilization level is greater than a fourth threshold, and process a plurality of third packets subsequent to the second packets in response to the memory utilization level being greater than the fourth threshold.

7. The router as claimed in any of claims 1 to 6, wherein the first controller is a Micro Control Unit (MCU) incorporated in the communication interface, and the second controller is a Central Processing Unit (CPU) of the router.

8. A hybrid packet processing method for a router comprising a first controller and a second controller, the hybrid packet processing method comprising:
receiving a plurality of first packets and a plurality of second packets subsequent to the first packets;
processing, by the second controller, the first packets to determine at least one of a current connection count, an application type, and a traffic parameter; and
determining, by the second controller, whether to enable the first controller to process the second packets according to at least one of the current connection count, the application type, and the traffic parameter.

9. The hybrid packet processing method as claimed in claim 8, further comprising:
determining, by the second controller, whether the current connection count is less than a first threshold;
enabling, by the second controller, the first controller to process the second packets in response to the current connection count being less than the first threshold; and
processing, by the second controller, the second packets in response to the current connection count being greater than or equal to the first threshold.

10. The hybrid packet processing method as claimed in claim 8 or 9, wherein the traffic parameter comprises at least one of the following:
a throughput of the router;
a total packet count;
a number of packets with sizes greater than a predetermined threshold;
a Media Access Control (MAC) address; and
information concerning a period of time.

11. The hybrid packet processing method as claimed in any of claims 8 to 10, further comprising:
determining, by the second controller, a traffic volume of the router according to at least one of the application type and the traffic parameter;
determining, by the second controller, whether the traffic volume is less than a second threshold;
processing, by the second controller, the second packets in response to the traffic volume being less than the second threshold; and
enabling, by the second controller, the first controller to process the second packets in response to the traffic volume being greater than or equal to the second threshold.

12. The hybrid packet processing method as claimed in claim 11, further comprising:
after the second controller has processed the second packets,
determining, by the second controller, whether a utilization level of the second controller is greater than a third threshold; and
enabling, by the second controller, the first controller to process a plurality of third packets subsequent to the second packets in response to the utilization level being greater than the third threshold.

13. The hybrid packet processing method as claimed in claim 11 or 12, further comprising:
after enabling the first controller to process the second packets,
determining, by the second controller, whether a memory utilization level is greater than a fourth threshold; and
processing, by the second controller, a plurality of third packets subsequent to the second packets in response to the memory utilization level being greater than the fourth threshold.

14. The hybrid packet processing method as claimed in any of claims 8 to 13, wherein the first controller is a Micro Control Unit (MCU) incorporated in the communication interface, and the second controller is a Central Processing Unit (CPU) of the router.
